# EUROPEAN PATENT APPLICATION

(11) **EP 2 966 831 A1**
(43) Date of publication of application: **13.01.2016**
(21) Application number: 15175609.5
(22) Date of filing: 07.07.2015
(51) Int. Cl.: H04L 29/06

(54) **AUTHENTICATION SYSTEM, AUTHENTICATION METHOD, PROGRAM AND COMMUNICATION SYSTEM**

(30) Priority: 11.07.2014 JP 2014143091
(71) Applicant: Ricoh Company, Ltd., Tokyo 143-8555 (JP)
(72) Inventor: INOUE, Koichi, Tokyo, 143-8555 (JP); TAKAYASU, Osamu, Tokyo, 143-8555 (JP)
(74) Representative: Schwabe - Sandmair - Marx

(57) **Abstract**

An authentication system includes a storage unit that stores a service expiration date of a service provided by a client; a reception unit that receives from the client a request to issue an access token used to authorize use of the service; an issuing unit that issues, in response to the reception of the request, the access token based on the service expiration date to the client; and a determining unit that, in response to the issued access token transmitted by the client, determines that the access token is valid if the current date and time does not exceed the service expiration date of the service, or determines that the access token is not valid if the current date and time exceeds the service expiration date.

## Description

### BACKGROUND OF THE INVENTION

### Field of the Invention

The present invention relates to an authentication system, an authentication method, a program, and a communication system.

### Description of the Related Art

Teleconference systems for holding a teleconference with a remote location via a communication network such as the Internet are in common use. According to the conference system, in a conference room where one of parties such as attendees of the teleconference is present, a terminal device of the teleconference system is used to shoot images and collect voice sound of the party of the conference in the conference room. Data on the images and the voice sound are converted into digital data and transmitted to a terminal device of another party. The transmitted digital data is displayed on a display screen and the voice sound is output from a loudspeaker in a conference room of the other party, thereby holding the teleconference in a manner similar to an actual conference (Patent Document 1).

There are cases where a third party other than a provider of the teleconference system provides services operating on the teleconference system by using the teleconference system. In such cases, it is necessary to have a mechanism of access control that authenticates a terminal or a user and authorizes use of services depending on a contract state, for example. In order to perform user authentication for a plurality of services by using authentication information managed in a single access control service, a protocol called OAuth is used as described in Non-Patent Document 1. In accordance with this, a user is able to use the services by authorizing a client (a terminal or a program) via an authorization server.

Further, a feature of a server that allows a service program on a client to use a function on the server in accordance with presence or absence of association of identifiers of the service program and the client is disclosed (Patent Document 2).

In the above-mentioned teleconference system, if an authentication mechanism in related art such as OAuth is used to provide services, availability of the services is managed for each user. However, a method in related art cannot determine the availability of each service based on a service expiration date.
[Patent Document 1] Japanese Laid-Open Patent Application No. 2013-085208
[Patent Document 2] Japanese Patent No. 4583152
[Non-Patent Document 1] D. Hardt, Ed "RFC-6749", [online], October of 2012, <URL: http://tools.ietf.org/html/rfc6749>

### SUMMARY OF THE INVENTION

It is a general object of at least one embodiment of the present invention to be able to determine availability of service that uses an authentication mechanism in related art on the basis of a service expiration date.

In an embodiment, an authentication system is provided. The authentication system includes: a storage unit that stores a service expiration date of a service provided by a client; a reception unit that receives from the client a request to issue an access token used to authorize use of the service; an issuing unit that issues, in response to the reception of the request, the access token based on the service expiration date to the client; and a determining unit that, in response to the issued access token transmitted by the client, determines that the access token is valid if the current date and time does not exceed the service expiration date of the service, or determines that the access token is not valid if the current date and time exceeds the service expiration date.

According to the present invention, it is possible to determine availability of service that uses an authentication mechanism in related art on the basis of a service expiration date.

### BRIEF DESCRIPTION OF THE DRAWINGS

Other objects and further features of embodiments will become apparent from the following detailed description when read in conjunction with the accompanying drawings, in which:
FIG. 1 is a schematic diagram of an authentication system in an embodiment of the present invention;
FIG. 2 is a configuration diagram illustrating hardware of an authentication apparatus in an embodiment of the present invention;
FIG. 3 is a functional block diagram of an authentication apparatus in an embodiment of the present invention;
FIG. 4 shows a table in a client management database (DB);
FIG. 5 shows a table in an authentication management DB;
FIG. 6 shows a table in a function authorization management DB;
FIG. 7 shows a table in a service authorization management DB;
FIG. 8 shows a table in a refresh token management DB;
FIG. 9 is a sequence diagram illustrating a process to issue an access token;
FIG. 10 is a flowchart illustrating a process to set a validity period of an access token;
FIG. 11 is a sequence diagram illustrating an authentication process;
FIG. 12 is a sequence diagram illustrating a process to reissue an access token;
FIG. 13 is a functional block diagram of an authentication apparatus and a service authorization device in an embodiment of the present invention;
FIG. 14 shows a table in a service authorization device management DB; and
FIG. 15 is a sequence diagram illustrating a process to issue an access token.

### DESCRIPTION OF THE PREFERRED EMBODIMENTS

In the following, embodiments of the present invention will be described with reference to the accompanying drawings.

### « Outline of authentication system »

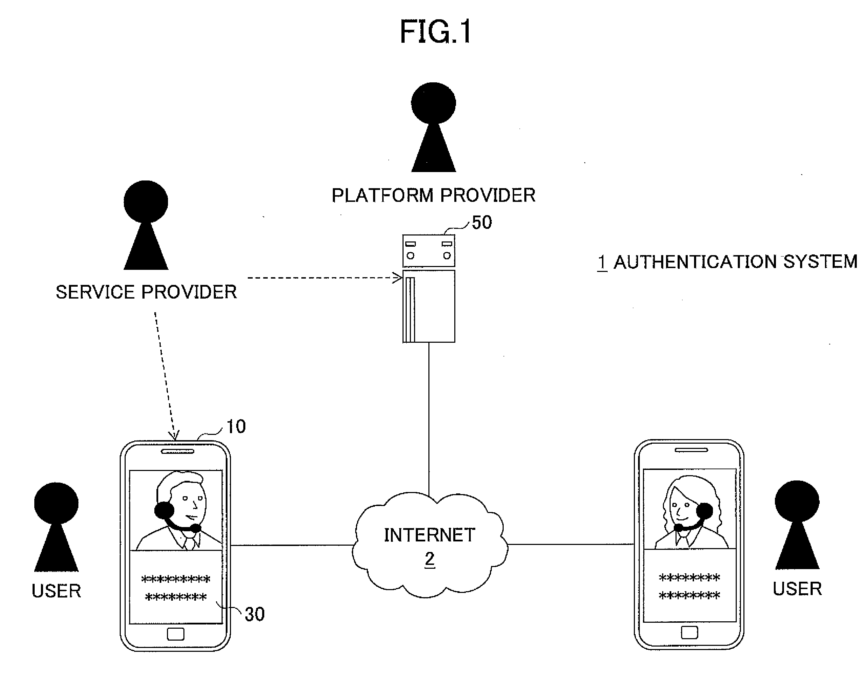

FIG. 1 is a schematic diagram of an authentication system 1 in an embodiment of the present invention. The authentication system 1 includes a terminal 10 that a user uses and an authentication apparatus 50 provided by a platform provider. The platform provider provides, via the authentication apparatus 50, an access control service to a client application 30 (hereafter "client 30") provided by a service provider which is a third party.

The user installs the client 30 in advance on his/her own terminal 10 such as a smartphone, the client 30 being provided by the service provider. The client 30 can execute a service by accessing the authentication apparatus 50 and receiving authentication from the authentication apparatus 50 via the Internet 2, for example.

The authentication apparatus 50 authenticates the client 30 using an access token employed in OAuth. Before the access token is issued, the authentication apparatus 50 authenticates the client 30 using an ID and a password transmitted from the client 30. The authentication apparatus 50 manages a service expiration date of a service for each client 30 (namely, for each user). The authentication apparatus 50 can issue the access token to the client 30 if the authentication using the ID and the password is successful and the current date and time does not exceed the service expiration date. In addition, service expiration dates for a plurality of different services may be associated with the same user and managed.

In accordance with this, the authentication system 1 is capable of performing access control within a framework of OAuth based on the service expiration date for each client 30.

In FIG. 1, the authentication apparatus 50 is configured with a single computer. However, the authentication apparatus 50 may be configured with a plurality of the computers as a system. In the following description, the authentication apparatus 50 is configured with the single computer for ease of explanation. « Hardware configuration »

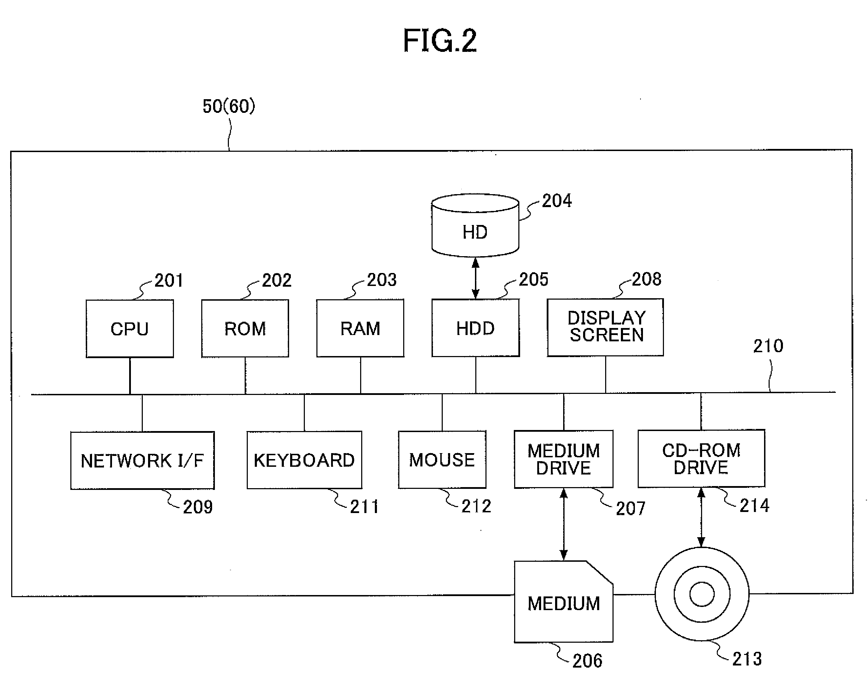

FIG. 2 is a configuration diagram illustrating hardware of the authentication apparatus 50 in the present embodiment of the present invention. The authentication apparatus 50 includes a Central Processing Unit (CPU) 201 that controls the entire operation of the authentication apparatus 50; a Read Only Memory (ROM) 202 that stores a program such as an Initial Program Loader (IPL); a Random Access Memory (RAM) 203 used as a work area of the CPU 201; a Hard Disk (HD) 204 that stores data for a program of the authentication apparatus 50; a Hard Disk Drive (HDD) 205 that controls reading or writing of data from or into the HD 204 in accordance with control of the CPU 201; a media drive 207 that controls reading or writing (storage) of data from or into a recording medium 206 such as a flash memory; a display screen 208 that displays various types of information such as a cursor, a menu, a window, characters, and an image; a network interface (I/F) 209 for performing data communication using the Internet 2; a keyboard 211 provided with a plurality of keys for inputting characters, numerical values, and various types of instructions; a mouse 212 for selecting and executing various types of instructions, selecting an object to be processed, and moving the cursor; a Compact Disc Read Only Memory (CD-ROM) drive 214 that controls reading or writing of various types of data from or into a CD-ROM 213 as an example of a removable recording medium; and a bus line 210 such as an address bus or a data bus for electrically connecting the above-mentioned constituent elements as shown in FIG. 2.

### « Functions »

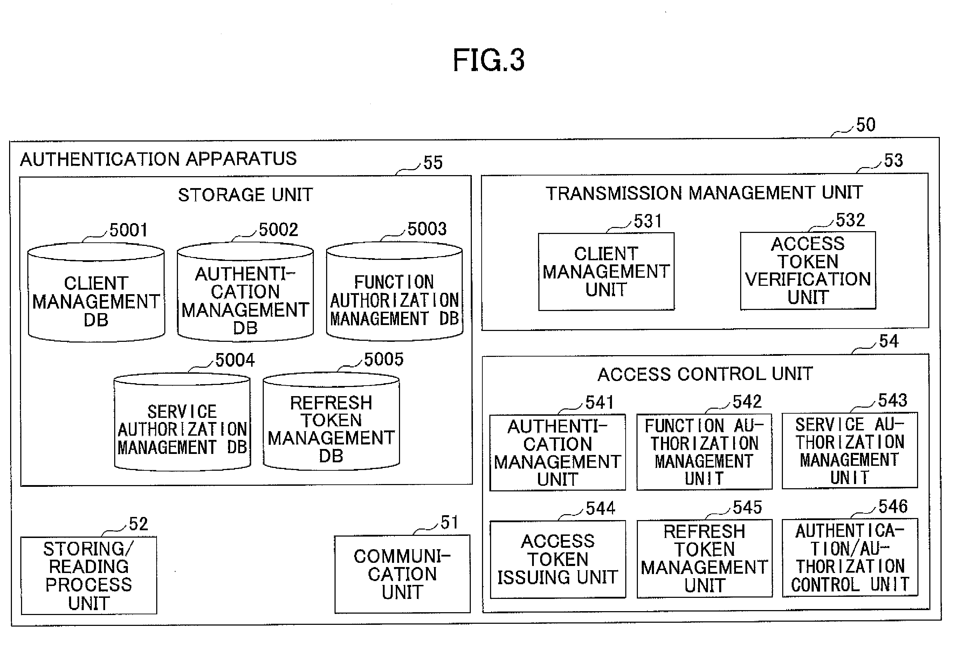

FIG. 3 is a functional block diagram of the authentication apparatus 50 in an embodiment of the present invention. The authentication apparatus 50 includes a communication unit 51, a storing/reading process unit 52, a transmission management unit 53, an access control unit 54, and a storage unit 55.

The storage unit 55 is implemented by the HD 204 shown in FIG. 2 and stores data used to authenticate the client 30 or a user of the client 30. The storage unit 55 manages a client management DB 5001, an authentication management DB 5002, a function authorization management DB 5003, a service authorization management DB 5004, and a refresh token management DB 5005 in particular.

The client management DB 5001 is a database that manages a name of a client, a connection status, and the like.

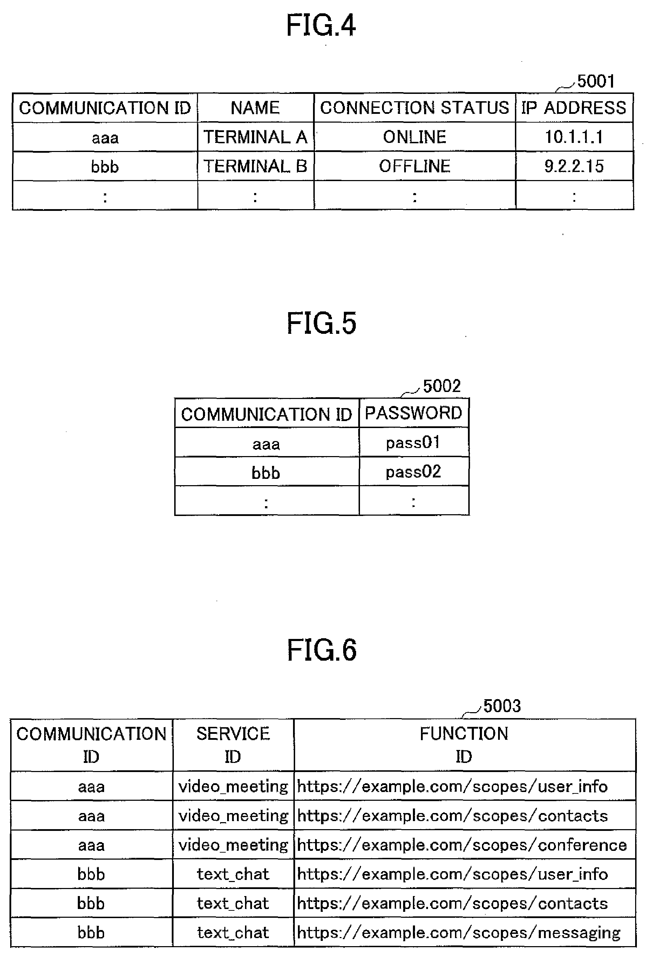

FIG. 4 shows a table in the client management DB 5001. The table shown in FIG. 4 stores a communication ID which serves as identification information for identifying the client 30 or a user of the client 30, the name of the client 30 or the name of the user of the client 30, the connection status of the client 30, and an IP address of the client 30. The name is set in advance for each client 30 or user. The connection status is set where necessary by the authentication apparatus 50 in response to a log-in request from the client 30. The IP address is specified through communication between the client 30 and the authentication apparatus 50 and is set where necessary by the authentication apparatus 50.

The authentication management DB 5002 is a database that stores a pair of a password and the communication ID which serves as identification information for identifying the client 30 or the user of the client 30.

FIG. 5 shows a table in the authentication management DB 5002. The table shown in FIG. 5 stores the communication ID and the password assigned to each client 30 or each user of the client 30 in an associated manner. In addition, the password may be a hash value obtained by using a one-way hash function such as SHA 256.

The function authorization management DB 5003 is a database that stores information that associates available services with functions for each client 30 (namely, for each communication ID).

FIG. 6 shows a table in the function authorization management DB 5003. The table shown in FIG. 6 stores a communication ID, a service ID indicative of a service available to the client 30 that has the communication ID, and a function ID indicative of a function of the authentication apparatus 50 used in the service in an associated manner. The function ID serves as identification information assigned to a function other than an authentication function provided by the authentication apparatus 50 as a platform. For example, if the authentication apparatus 50 is used as a teleconference server in a teleconference system, the authentication apparatus 50 may have the following functions.
- User information providing function to provide access to attribute information (name, group, contact address, residence, sex, and the like) about a user of the client 30.
- Contact information (an address book) providing function to provide access to an address book that serves as a list of addresses to which a teleconference is broadcast.
- Video conference relay function to relay images and voice sound to perform a teleconference.
- Text message relay function to send or receive a text message.

In addition, as shown in FIG. 6, some functions may be provided in a set in order to constitute a single service. For example, a teleconference service (video_meeting) is configured with the user information providing function (https://example.com/scopes/user_info), the contact information (address book) providing function (https://example.com/scopes/contacts), and the video conference relay function (https://example.com/scopes/conference). Further, a text chat (text messaging) service (text_chat) is configured with the user information providing function (https://example.com/scopes/user_info), the contact information (address book) providing function (https://example.com/scopes/contacts), and the text message relay function (https://example.com/scopes/messaging).

The service authorization management DB 5004 is a database that manages a service expiration date for each client 30 (namely, for each communication ID).

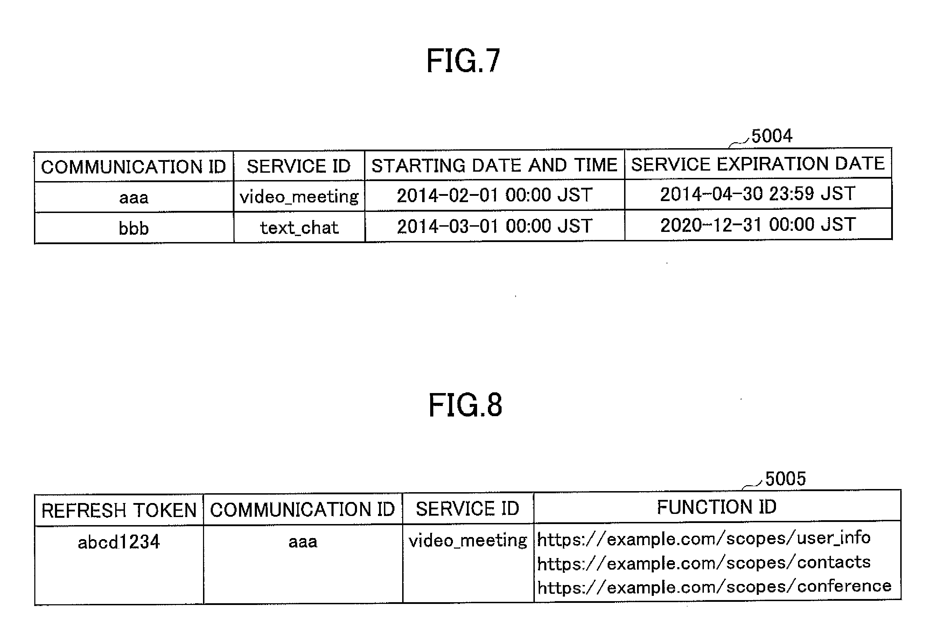

FIG. 7 shows a table in the service authorization management DB 5004. The table shown in FIG. 7 stores the communication ID, the service ID, a starting date and time to start using a service, and a service expiration date of the service in an associated manner. In addition, the starting date and time and the service expiration date are set where necessary by a platform provider or a service provider depending on payment of a price by a user, for example.

The refresh token management DB 5005 is a database that manages a refresh token generated together with an access token.

FIG. 8 shows a table in the refresh token management DB 5005. The table shown in FIG. 8 stores the refresh token (a character string), the communication ID to which the refresh token is to be provided, the service ID of a service available via the refresh token, and the function ID used in the service in an associated manner.

The communication unit 51 shown in FIG. 3 is implemented by a process of the network I/F 209 shown in FIG. 2 and exchanges data with the terminal 10 via the Internet 2.

The storing/reading process unit 52 is implemented by a process of the HDD 205 shown in FIG. 2, stores data in the storage unit 55, and reads data from the storage unit 55.

The transmission management unit 53 is implemented by a process of the CPU 201 shown in FIG. 2 and mainly performs a process to authenticate the client 30. The transmission management unit 53 includes a client management unit 531 and an access token verification unit 532.

The client management unit 531 receives a log-in request including a communication ID and a service ID from a client 30 and obtains connection information about the client 30. The client management unit 531 also receives an access token together with the log-in request from the client 30.

The client management unit 531 passes the communication ID, the service ID, and the access token to the access token verification unit 532. If the access token is valid, the client management unit 531 performs a log-in process for the client 30 and reports that the log-in process is completed to the client 30. The log-in process here includes a process to update a connection status and an IP address of the client 30 in the client management DB 5001 shown in FIG. 4. By contrast, if the access token is not valid, the client management unit 531 reports that the log-in process is not normally completed to the client 30.

The access token verification unit 532 verifies a signature of the access token received from the client management unit 531. If the signature of the access token is illicit, the access token verification unit 532 determines that the access token is not valid and reports this information to the client management unit 531.

If the signature of the access token is normal, the access token verification unit 532 searches the service authorization management DB 5004 shown in FIG. 7 using the received communication ID and service ID as a search key to specify a starting date and time and a service expiration date. If the current date and time is between the starting date and time and the service expiration date, the access token verification unit 532 determines that the access token is valid. By contrast, if the current date and time comes before the starting date and time or after the service expiration date, the access token verification unit 532 determines that the access token is not valid. The access token verification unit 532 reports a determination result to the client management unit 531.

The access control unit 54 is implemented by a process of the CPU 201 shown in FIG. 2 and mainly performs a process to issue an access token. The access control unit 54 includes an authentication management unit 541, a function authorization management unit 542, a service authorization management unit 543, an access token issuing unit 544, a refresh token management unit 545, and an authentication/authorization control unit 546.

The authentication management unit 541 verifies, in response to an instruction of the authentication/authorization control unit 546, whether a pair of a communication ID and a password received from the client 30 is registered with the authentication management DB 5002 shown in FIG. 5. If the pair of the communication ID and the password is registered with the authentication management DB 5002, the authentication management unit 541 determines that authentication is successful. By contrast, if the pair of the communication ID and the password is not registered with the authentication management DB 5002, the authentication management unit 541 determines that authentication has failed. The authentication management unit 541 reports a determination result to the authentication/authorization control unit 546.

The authentication management unit 541 may convert the received password into a hash value using a predetermined hash function and use the hash value and the communication ID to confirm whether the pair is correct.

The function authorization management unit 542 verifies, in response to an instruction of the authentication/authorization control unit 546, whether a set of the communication ID, a service ID, and a function ID is registered with the function authorization management DB 5003 shown in FIG. 6. If the set of the communication ID, the service ID, and the function ID is registered with the function authorization management DB 5003, the function authorization management unit 542 determines that use of a function is authorized. By contrast, if the set of the communication ID, the service ID, and the function ID is not registered with the function authorization management DB 5003, the function authorization management unit 542 determines that the use of the function is not authorized. The function authorization management unit 542 reports a determination result to the authentication/authorization control unit 546. In addition, a plurality of different function IDs may be associated with a single service ID. Further, a plurality of different service IDs may be associated with a single communication ID.

The service authorization management unit 543 searches, in response to an instruction of the authentication/authorization control unit 546, the service authorization management DB 5004 shown in FIG. 7 using a pair of the communication ID and the service ID as a search key to specify a corresponding starting date and time and a corresponding service expiration date. The service authorization management unit 543 also obtains the current date and time and determines whether the current date and time is between the starting date and time and the service expiration date.

If the current date and time is between the starting date and time and the service expiration date, the service authorization management unit 543 determines that use of a service is authorized and reports this information to the authentication/authorization control unit 546. In this case, the service authorization management unit 543 also reports the starting date and time and the service expiration date to the authentication/authorization control unit 546. By contrast, if the current date and time comes before the starting date and time or after the service expiration date, the service authorization management unit 543 determines that the use of the service is not authorized and reports this information to the authentication/authorization control unit 546.

The access token issuing unit 544 issues, in response to an instruction of the authentication/authorization control unit 546, an access token that has a validity expiration date for each service executed by the client 30. The access token issued by the access token issuing unit 544 has a validity period determined in advance as a default value. The validity period is set not to exceed the service expiration date.

In addition, the access token issuing unit 544 can issue an access token in a form of JSON Web Token (draft-ietf-oauth-json-web-token-16), for example. The access token includes information at least about a communication ID, a service ID, a function ID, a validity period, and an issuing date and time of the access token and is signed with a private key of the authentication apparatus 50. A service that verifies the access token can extract the included information by verifying a signature of the access token with a public key of the authentication apparatus 50 and then interpreting the form (JSON Web Token, for example) used to create the access token.

The refresh token management unit 545 issues a refresh token for the client 30 in response to an instruction of the authentication/authorization control unit 546. The refresh token includes an unpredictable character string necessary, when the validity expiration date of the access token has come, to issue a new access token. The refresh token management unit 545 stores information about a generated refresh token in the refresh token management DB 5005 shown in FIG. 8.

The refresh token has a given structure. For example, the refresh token may have a structure used in the OAuth protocol described in Non-Patent Document 1. In general, a validity period is set for the refresh token. In this case, a period (several days to several months) during which authentication is possible without prompting a user to input a communication ID and a password again is specified.

The authentication/authorization control unit 546 receives a request to issue an access token from the client 30 and performs a process to issue an access token and a refresh token using the above-mentioned units. If the access token and the refresh token are correctly issued, the authentication/authorization control unit 546 transmits the access token to the client 30. By contrast, if the access token is not correctly issued, the authentication/authorization control unit 546 reports that authentication/authorization has failed to the client 30.

### « Operation example - process to issue access token »

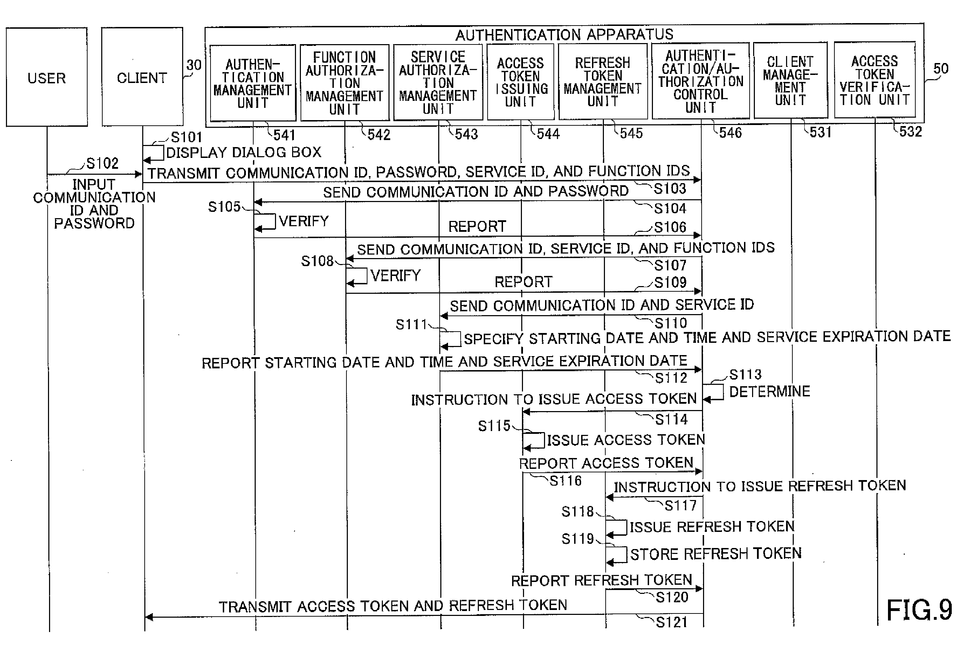

FIG. 9 is a sequence diagram illustrating a process to issue an access token. In the following description, it is assumed that the client 30 is an application for executing a service of a video conference.

The client 30 of the terminal 10 displays a dialog box to prompt a user to input a communication ID and a password (S101). In this dialog box, a text field where the communication ID and the password are to be input and a "Log-in" button are arranged. The user inputs a communication ID "aaa" and a password "pass01" and then presses the "Log-in" button (S102). The client 30 transmits the communication ID, the password, a service ID (video_meeting) of a video conference, and the following function IDs necessary to perform the video conference to the authentication/authorization control unit 546 of the authentication apparatus 50 and requests issuance of an access token (S103).
- Function IDs
   https://example.com/scopes/user_info
   https://example.com/scopes/contacts
   https://example.com/scopes/conference

This request and communication using the access token below are all performed via a communication path encrypted using SSL/TLS.

The authentication/authorization control unit 546 of the authentication apparatus 50 sends the communication ID "aaa" and the password "pass01" that have been received to the authentication management unit 541 (S104). The authentication management unit 541 verifies whether a pair of the communication ID and the password received are registered with the authentication management DB 5002 shown in FIG. 5 (S105). The authentication management unit 541 determines that authentication is successful because the pair of the communication ID and the password is registered with the authentication management DB 5002. The authentication management unit 541 reports this determination result to the authentication/authorization control unit 546 (S106).

Next, the authentication/authorization control unit 546 of the authentication apparatus 50 sends the communication ID "aaa", the service ID "video_meeting", and the above-mentioned function IDs to the function authorization management unit 542 (S107). The function authorization management unit 542 verifies whether a set of the communication ID, the service ID, and the function IDs is registered with the function authorization management DB 5003 shown in FIG. 6 (S108). The function authorization management unit 542 determines that use of functions is authorized because the set of the communication ID, the service ID, and the function IDs is registered with the function authorization management DB 5003. The function authorization management unit 542 reports this determination result to the authentication/authorization control unit 546 (S109).

Next, the authentication/authorization control unit 546 of the authentication apparatus 50 sends the communication ID "aaa" and the service ID "video_meeting" to the service authorization management unit 543 (S110). The service authorization management unit 543 searches the service authorization management DB 5004 shown in FIG. 7 using a pair of the communication ID and the service ID as a search key to specify a corresponding starting date and time "2014-02-01 00:00 JST" and a corresponding service expiration date "2014-04-30 23:59 JST" (S111). Next, the service authorization management unit 543 reports the starting date and time and the service expiration date to the authentication/authorization control unit 546 (S112). Next, the authentication/authorization control unit 546 determines that the current date and time (assumed to be "2014-04-01 10:00 JST" here) is between the starting date and time and the service expiration date (S113).

Next, the authentication/authorization control unit 546 of the authentication apparatus 50 sends an instruction to issue an access token to the access token issuing unit 544 (S114). In this case, the authentication/authorization control unit 546 sends the starting date and time, the service expiration date, the communication ID, the password, the service ID, and the function IDs to the access token issuing unit 544. The access token issuing unit 544 issues an access token that has a validity expiration date that does not exceed the service expiration date (S115). The access token includes information at least about the communication ID, the service ID, the function IDs, a validity period, and an issuing date and time of the access token and is signed with a private key of the authentication apparatus 50. How the validity expiration date of the access token is determined will be described later. Next, the access token issuing unit 544 reports the issued access token to the authentication/authorization control unit 546 (S116).

The authentication/authorization control unit 546 of the authentication apparatus 50 further sends an instruction to issue a refresh token to the refresh token management unit 545 (S117). In this case, the authentication/authorization control unit 546 may send information such as the starting date and time, the service expiration date, the communication ID, the password, and the service ID to the refresh token management unit 545 where necessary. The refresh token management unit 545 uses the received information to issue a refresh token (S118). The refresh token management unit 545 also stores information about the issued refresh token in the refresh token management DB 5005 shown in FIG. 8 (S119). Then the refresh token management unit 545 reports the issued refresh token to the authentication/authorization control unit 546 (S120).

The authentication/authorization control unit 546 of the authentication apparatus 50 transmits the issued access token and the issued refresh token to the client 30(S121).

### « Operation example - process to set validity period of access token»

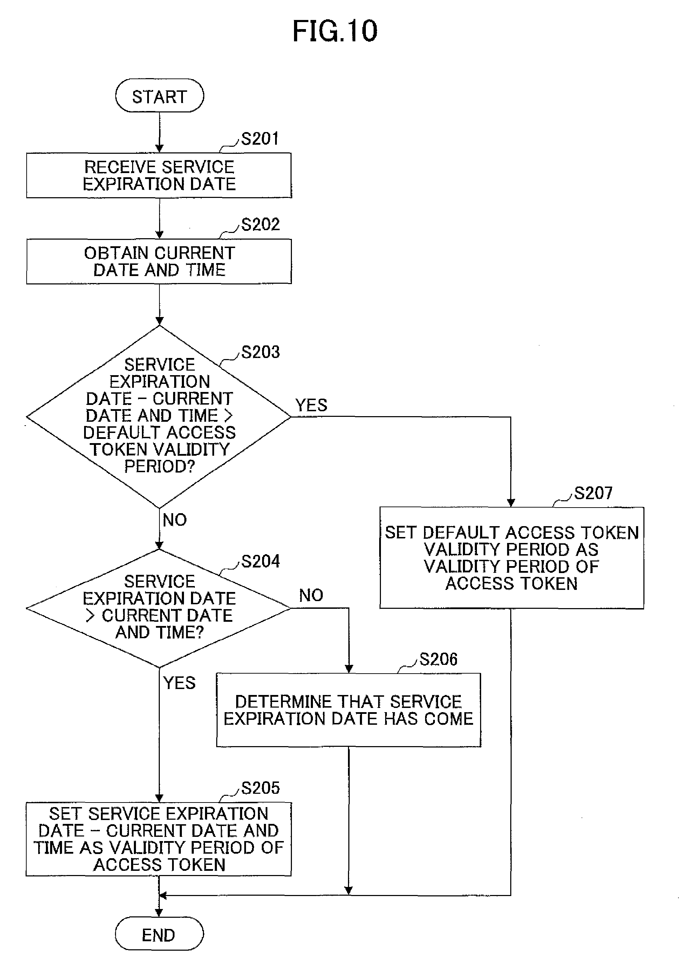

FIG. 10 is a flowchart illustrating a process to set a validity period of an access token. The process shown in FIG. 10 is performed by the access token issuing unit 544.

First, the access token issuing unit 544 receives an instruction to issue an access token (S 114 in FIG. 9) and a service expiration date from the authentication/authorization control unit 546 (S201). Next, the access token issuing unit 544 obtains the current date and time (S202). Next, the access token issuing unit 544 determines whether a period obtained by subtracting the current date and time from the service expiration date is greater than a validity period of an access token which is set in advance by default (S203). If the period obtained by subtracting the current date and time from the service expiration date is greater than the default access token validity period (Yes in S203), the access token issuing unit 544 sets the default access token validity period as a validity period of the access token (S207).

By contrast, if the period obtained by subtracting the current date and time from the service expiration date is not greater than the default access token validity period (No in S203), the access token issuing unit 544 further determines whether the service expiration date is greater than the current date and time (S204). If the service expiration date comes after the current date and time (Yes in S204), the access token issuing unit 544 sets the period obtained by subtracting the current date and time from the service expiration date as the validity period of the access token (S205). By contrast, if the service expiration date comes before the current date and time (No in S204), the access token issuing unit 544 determines that the service expiration date has already come (S206).

If the access token issuing unit 544 determines that the service expiration date has already come, the access token issuing unit 544 reports this information to the authentication/authorization control unit 546. In this case, the authentication/authorization control unit 546 reports that authentication/authorization has failed to the client 30.

### « Operation example - authentication process »

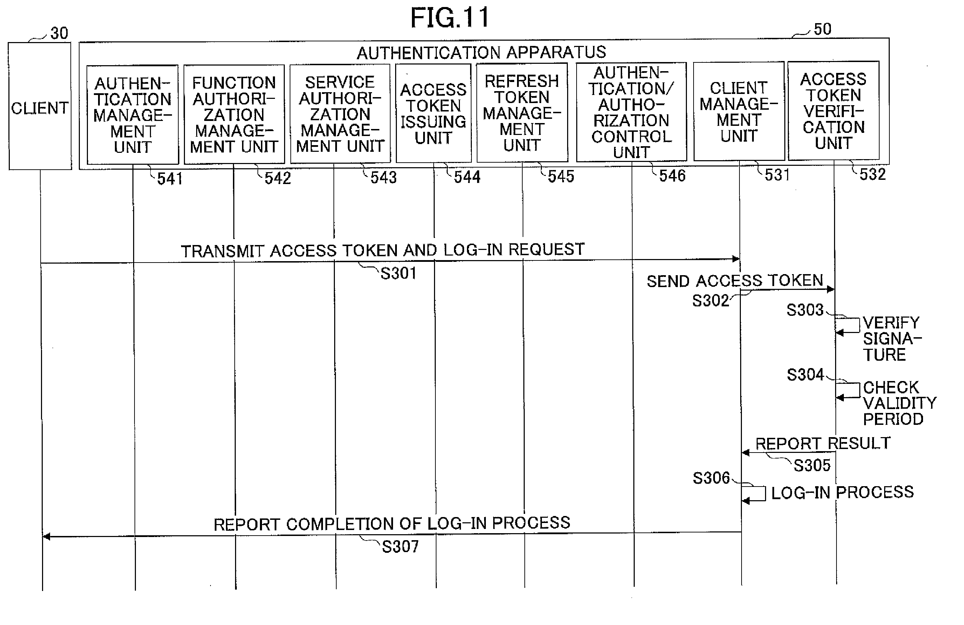

FIG. 11 is a sequence diagram illustrating an authentication process. The following describes a process to authenticate the client 30 using an access token generated in accordance with the sequence shown in FIG. 9.

First, the client 30 that has an access token transmits the access token and a log-in request to the client management unit 531 of the authentication apparatus 50 (S301). The client management unit 531 passes the received access token to the access token verification unit 532 (S302). The access token verification unit 532 verifies a signature of the access token to confirm that the access token has not been forged (S303). Next, the access token verification unit 532 checks whether the current date and time is included in the validity period of the access token from the issuing date and time of the access token and the validity period stored in the access token (S304). If the current date and time is within the validity period of the access token, the access token verification unit 532 reports this information to the client management unit 531 (S305).

The client management unit 531 reads out the communication ID from the access token and performs a log-in process using the communication ID (S306). The log-in process includes setting a connection status in the client management DB 5001 to "online", for example. When the log-in process is completed, the client management unit 531 reports the completion of the log-in process to the client 30 (S307).

In S304, if the current date and time is not included in the validity period of the access token, the access token verification unit 532 reports this information to the client management unit 531. In this case, the client management unit 531 does not perform the log-in process and reports that the log-in is impossible to the client 30.

### « Operation example - process to reissue access token »

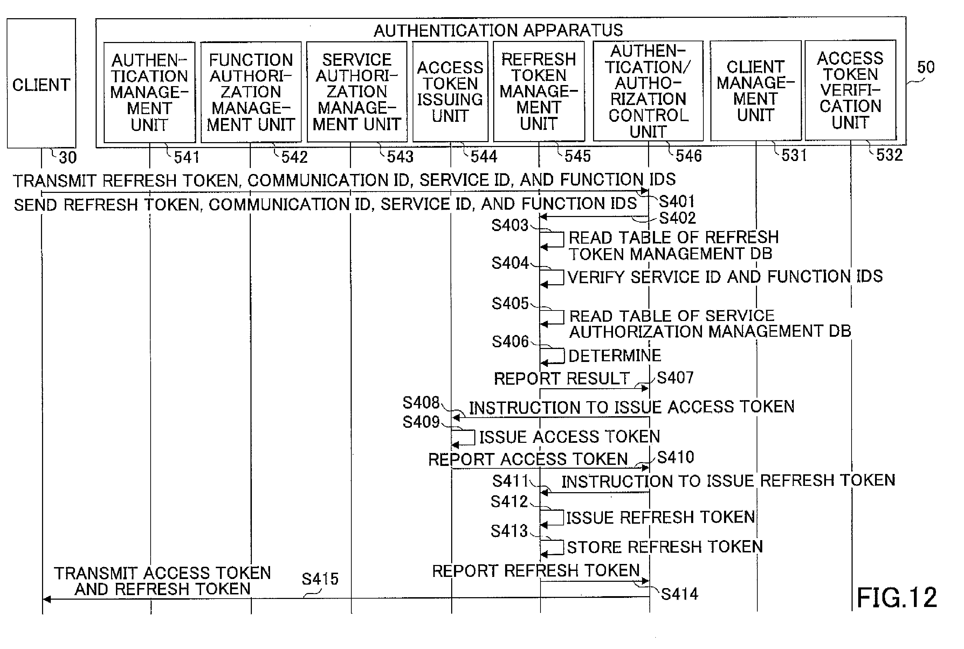

FIG. 12 is a sequence diagram illustrating a process to reissue an access token. In the following description, it is assumed that a refresh token "abcd1234" shown in FIG. 8 is used.

First, the client 30 transmits the refresh token "abcd1234", the communication ID "aaa", the service ID "video_meeting", and the following function ID list to the authentication/authorization control unit 546 of the authentication apparatus 50 (S401).
- Function IDs
   https://example.com/scopes/user_info
   https://example.com/scopes/contacts
   https://example.com/scopes/conference

The authentication/authorization control unit 546 sends the refresh token, the communication ID, the service ID, and the function IDs that have been received to the refresh token management unit 545 (S402).

The refresh token management unit 545 reads the refresh token management DB 5005 shown in FIG. 8 (S403). Next, the refresh token management unit 545 searches the refresh token management DB 5005 using the received refresh token as a search key and verifies whether a specified service ID and specified function IDs correspond to the service ID and the function IDs that have been received (S404).

If the service IDs match and the function IDs match, so that the verification of the refresh token is correctly completed, the refresh token management unit 545 reads the service authorization management DB 5004 shown in FIG. 7 (S405). Next, the refresh token management unit 545 searches the service authorization management DB 5004 using the communication ID and the service ID as a search key to specify a starting date and time and a service expiration date. Then the refresh token management unit 545 determines whether the current date and time is between the starting date and time and the service expiration date (S406). If the current date and time is between the starting date and time and the service expiration date, the refresh token management unit 545 reports that the refresh token is valid to the authentication/authorization control unit 546 (S407).

If the service IDs do not match and the function IDs do not match in S404 or if the current date and time comes before the starting date and time or after the service expiration date in S406, the refresh token management unit 545 reports that the refresh token is not valid to the authentication/authorization control unit 546.

The authentication/authorization control unit 546 that has received the report that the refresh token is valid issues an access token and a refresh token anew in accordance with the same procedure as in S 114 to S121 shown in FIG. 9 and transmits the access token and the refresh token to the client 30 (S408 to S415).

### « Effects »

In accordance with the above-mentioned configuration, in the authentication system 1 according to the present embodiment, the authentication apparatus 50 verifies user authentication information, determines whether the current date and time is included in a period during which a service is available, and returns an authentication result based on a determination result. In accordance with this, when a service provider provides services to a user while using the authentication apparatus 50 which is a platform that provides an authentication service, the service provider can correctly control availability of the services. In particular, according to the present embodiment, it is possible to perform detailed access control in accordance with a service expiration date without changing an authentication procedure of the OAuth protocol in the client 30.

### « Variation »

In the following description, the service authorization management unit 543 (see FIG. 3) included in the authentication apparatus 50 in the above-mentioned embodiment is disposed in a service authorization device 60 capable of communication via a network such as the Internet 2.

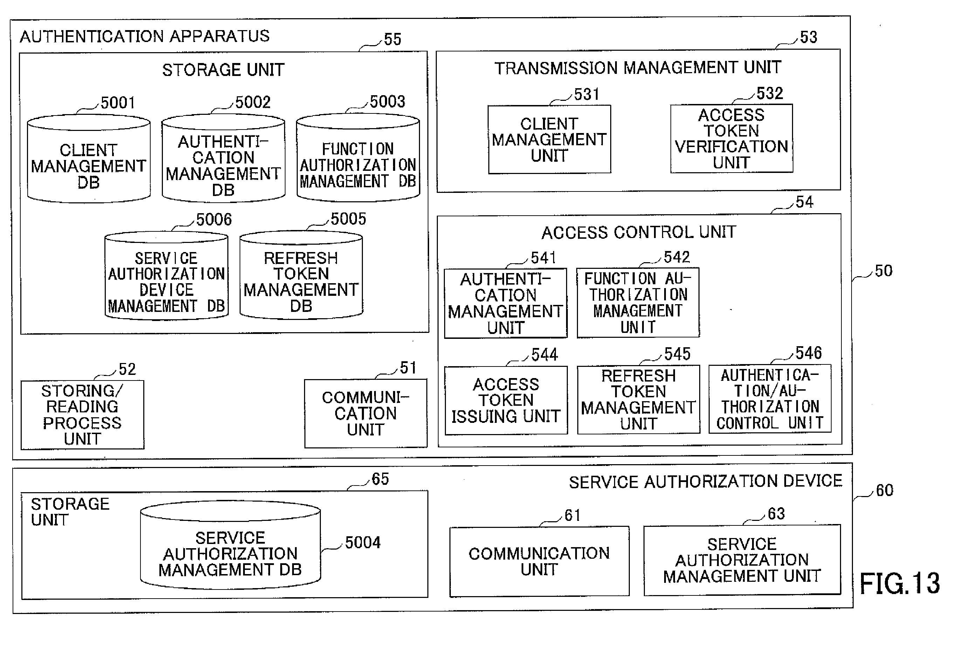

FIG. 13 is a functional block diagram of the authentication apparatus 50 and the service authorization device 60 in an embodiment of the present invention. Differences from FIG. 3 will be mainly described. The authentication apparatus 50 shown in FIG. 13 does not include the service authorization management unit 543 or the service authorization management DB 5004 shown in FIG. 3. The authentication apparatus 50 in FIG. 13 includes a service authorization device management DB 5006 instead.

The service authorization device management DB 5006 manages connection information about the service authorization device 60 that provides functions of the service authorization management unit 543.

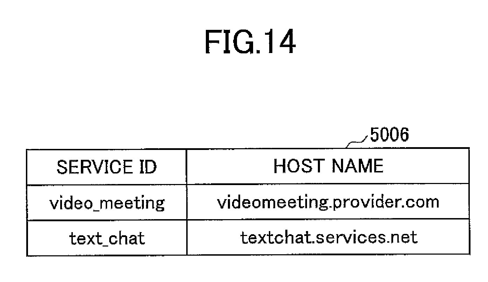

FIG. 14 shows a table in the service authorization device management DB 5006. The table shown in FIG. 14 stores a service ID and a host name. The service authorization device 60 is a host (a server or a system) provided by each service provider. While the authentication apparatus 50 can verify the service expiration date of each service in the above-mentioned embodiment, the service authorization device 60 provided by the service provider performs this verification in the present embodiment. This is because in some cases, it is preferable that the service provider can set the service expiration date of each service within its own system. Accordingly, the service authorization device management DB 5006 manages, for each service ID that specifies a service, a name of a host capable of verifying the service expiration date of the service.

Upon determining the service expiration date, the authentication/authorization control unit 546 in the present embodiment refers to the service authorization device management DB 5006 shown in FIG. 14 and requests a specified service authorization device 60 to determine the service expiration date.

In FIG. 13, the service authorization device 60 is shown. The service authorization device 60 is a system constituted with at least one computer having the same hardware configuration as shown in FIG. 2, for example. The service authorization device 60 includes a communication unit 61, a service authorization management unit 63, and a storage unit 65.

The storage unit 65 is implemented by the HD 204 shown in FIG. 2 and includes the service authorization management DB 5004 in the same manner as in the storage unit 55 shown in FIG. 3. The service authorization management DB 5004 has the same table as shown in FIG. 7.

The communication unit 61 is implemented by the network I/F 209 shown in FIG. 2 and communicates with the authentication apparatus 50 or other devices via a network such as the Internet 2.

The service authorization management unit 63 has the same functions as in the service authorization management unit 543 of the authentication apparatus 50 shown in FIG. 3. In other words, in response to an instruction of the authentication/authorization control unit 546 of the authentication apparatus 50, the service authorization management unit 63 searches the service authorization management DB 5004 shown in FIG. 7 using the pair of a communication ID and a service ID as a search key to specify a corresponding starting date and time and a corresponding service expiration date.

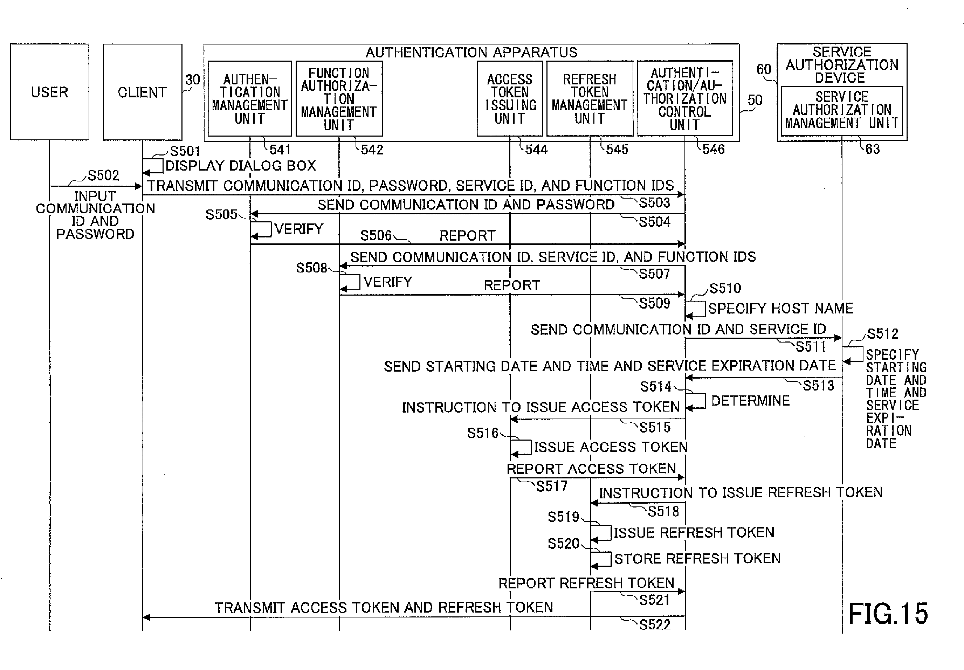

FIG. 15 is a sequence diagram illustrating a process to issue an access token. In FIG. 15, S501 to S509 are steps where the authentication apparatus 50 receives a communication ID, a password, a service ID, and the like from the client 30 and the function authorization management unit 542 performs verification in the same manner as in S101 to S109 shown in FIG. 9. Then the authentication/authorization control unit 546 of the authentication apparatus 50 reads the service authorization device management DB 5006 shown in FIG. 14 using the service ID "video_meeting" as a search key to specify a host name "video_meeting.provier.com" (S510).

Next, the authentication/authorization control unit 546 of the authentication apparatus 50 sends the communication ID "aaa" and the service ID "video_meeting" to the service authorization management unit 63 of the service authorization device 60 (S511). The service authorization management unit 63 searches the service authorization management DB 5004 shown in FIG. 7 using a pair of the communication ID and the service ID as a search key to specify a corresponding starting date and time "2014-02-01 00:00 JST" and a corresponding service expiration date "2014-04-30 23:59 JST" (S512). Next, the service authorization management unit 63 reports the starting date and time and the service expiration date to the authentication/authorization control unit 546 of the authentication apparatus 50 (S513). Next, the authentication/authorization control unit 546 of the authentication apparatus 50 determines that the current date and time (assumed to be "2014-04-01 10:00 JST" here) is between the starting date and time and the service expiration date (S514).

S515 to S522 are steps where the authentication apparatus 50 subsequently issues an access token and a refresh token and reports them to the client 30 in the same manner as in S 114 to S121 shown in FIG. 9.

In accordance with the above-mentioned configuration, in the authentication system 1 according to the present embodiment, the service authorization device 60 provided by a service provider different from the authentication apparatus 50 provided by a platform provider determines the service expiration date of a service. In other words, the platform provider does not control the service expiration date of each service operating on a platform. Instead, each service provider that provides the client 30 can manage the service expiration date using the service authorization device 60 operated by the service provider. In accordance with this, the service provider does not need to report information about the service expiration date of the service to the authentication apparatus 50 each time the service expiration date for a user is changed.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitably programmed apparatuses such as a general-purpose computer, a personal digital assistant, a mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, a hard disk, a CD ROM, a magnetic tape device or a solid state memory device.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

Further, the present invention is not limited to these embodiments, and various variations and modifications may be made without departing from the scope of the present invention.

## Claims

1. An authentication system **characterized by**:
a storage unit that stores a service expiration date of a service provided by a client;
a reception unit that receives from the client a request to issue an access token used to authorize use of the service;
an issuing unit that issues, in response to the reception of the request, the access token based on the service expiration date to the client; and
a determining unit that, in response to the issued access token transmitted by the client, determines that the access token is valid if the current date and time does not exceed the service expiration date of the service, or determines that the access token is not valid if the current date and time exceeds the service expiration date.

2. The authentication system as claimed in claim 1, wherein the authentication system authorizes the client to use the service if the determining unit determines that the access token is valid, and the authentication system does not authorize the client to use the service if the determining unit determines that the access token is not valid.

3. The authentication system as claimed in claim 1 or 2, wherein the issuing unit issues the access token if the current date and time does not exceed the service expiration date.

4. The authentication system as claimed in claim 3, wherein
the reception unit receives from the client a request to reissue the access token and
the issuing unit issues another access token if the current date and time does not exceed the service expiration date.

5. The authentication system as claimed in claim 4, wherein the issuing unit issues, together with the access token, a refresh token used to update the access token.

6. The authentication system as claimed in any one of claims 1 to 5, wherein the client is an application having a video conference function or a text messaging function.

7. The authentication system as claimed in claim 1, further being **characterized by** a first system for a provider of a platform and a second system for a provider of the client, wherein
the reception unit and the issuing unit are disposed in the first system and the determining unit is disposed in the second system.

8. An authentication method **characterized by**:
receiving, from a client, a request to issue an access token used to authorize use of a service provided by the client;
reading a service expiration date of the service from a storage unit in response to the reception of the request;
issuing the access token based on the read service expiration date to the client;
receiving the issued access token transmitted by the client; and
determining, in response to the issued access token transmitted by the client, that the access token is valid if the current date and time does not exceed the service expiration date of the service, or that the access token is not valid if the current date and time exceeds the service expiration date.

9. A non-transitory computer-readable recording medium storing a computer-readable program that, when executed by a computer, causes the computer to perform the authentication method as claimed in claim 8.

10. A communication system including an authentication apparatus and a client, the communication system being **characterized by**:
a transmission unit that transmits a request to issue an access token used to authorize use of a service to the authentication apparatus;
a reception unit that receives the request from the client;
a storage unit that stores a service expiration date of the service provided by the client;
an issuing unit that issues, in response to the reception of the request, the access token based on the service expiration date to the client; and
a determining unit that, in response to the issued access token transmitted by the client, determines that the access token is valid if the current date and time does not exceed the service expiration date of the service, or determines that the access token is not valid if the current date and time exceeds the service expiration date.
